# EUROPÄISCHE PATENTSCHRIFT

(11) **EP 1 265 497 B1**
(45) Veröffentlichungstag und Bekanntmachung des Hinweises auf die Patenterteilung: **14.12.2005**
(21) Anmeldenummer: 01911469.3
(22) Anmeldetag: 10.01.2001
(51) Int. Cl.: A23L 1/217, A23P 1/08

(54) **VERFAHREN ZUM COATING (BESCHICHTUNG) EINES KARTOFFELPRODUKTES**
METHOD FOR THE COATING OF A POTATO PRODUCT
PROCEDE POUR ENROBER UN PRODUIT CONSTITUE DE POMME DE TERRE

(30) Priorität: 14.03.2000 DE 10011795
(43) Veröffentlichungstag der Anmeldung: 18.12.2002
(73) Patentinhaber: Stöver Produktion GmbH & Co. KG, 27793 Wildeshausen (DE)
(72) Erfinder: STÖVER, Reinhold, 27793 Wildeshausen (DE)
(74) Vertreter: Eisenführ, Speiser & Partner
(86) Internationale Anmeldenummer: PCT/EP2001/000184
(87) Internationale Veröffentlichungsnummer: WO 2001/067892

(56) Entgegenhaltungen:
- EP-A- 0 499 684
- EP-A- 0 901 756
- EP-A- 0 935 927
- WO-A-00/08953
- WO-A-91/12732
- FR-A- 2 428 983
- US-A- 5 612 075
- US-A- 5 648 110
- US-A- 5 698 252
- US-A- 5 753 286
- US-A- 5 885 639
- US-A- 5 965 189
- US-A- 6 033 697

## Beschreibung

Die Erfindung betrifft ein Verfahren zur Herstellung eines mittels Stärke beschichteten Kartoffelproduktes, insbesondere von stabförmigen Kartoffelprodukten (Pommes Frites). Ein solches Beschichten wird nachfolgend auch als Coating bezeichnet, wobei die Coating-Menge (Masse) Stärke und gegebenenfalls verschiedene Gewürze oder andere Nahrungsmittelzusätze enthält und flüssiger, breiiger oder pulveriger Konsistenz ist.

Ferner betrifft die Erfindung eine Vorrichtung zur Durchführung des Verfahrens sowie ein stärkebeschichtetes (gecoatetes) Kartoffelprodukt.

### Stand der Technik:

Es ist bereits seit längerem bekannt, gecoatete Kartoffelprodukte, insbesondere stabförmige Kartoffelprodukte herzustellen. Der Vorteil des Coating besteht darin, dass die stabförmigen Kartoffelprodukte - Pommes Frites - nach Zubereitung (vor dem Verzehr) in einer Friteuse knuspriger bzw. krosser schmecken und höheren Qualitätsansprüchen genügen als ungecoatete Pommes Frites. Bei den bekannten Verfahren bzw. einer bekannten Vorrichtung zum Coaten von Pommes Frites werden diese mittels entsprechender Vorrichtung (Rüttler) zunächst einmal in ihrer Längsrichtung ausgerichtet und die so ausgerichteten Pommes Frites werden in einem Verband mit einer Fördervorrichtung, vorzugsweise einem Förderband transportiert. Hierbei wird auf den Pommes Frites-Verband mittels eines Schleiers eine Stärkelösung (in Wasser gelöste Stärke) oder eine ähnliche Coating-Lösung gegeben. Hiemach wird der Pommes Frites-Verband mittels einer Fördereinrichtung mit Unter- und Oberband durch ein Tauchbad geführt und nach Verlassen des Tauchbades über ein relativ langes Abtropf-Förderband (mehrere Meter lang) abgeführt, auf dem die überschüssige Coating-Flüssigkeit abtropfen kann. Danach werden die Pommes Frites fritiert und anschließend tiefgefroren oder gekühlt dann einer Verpackungsstation zugeführt und sind dann verkaufsfähig.

Aus US 5,698,252 ist ein sog. Nass-Coating bekannt, bei welchem Kartoffelprodukte mit einer entsprechenden Schicht versehen werden.

Ein entsprechendes Nass-Coating ist auch aus dem Stand der Technik nach US 5,753,286 und aus EP 0 935 927 bekannt.

Aus WO 91/12732 ist ein Verfahren zur Vorbereitung von durch Mikrowellen erhitzbaren Pommes Frites bekannt, wobei die Pommes Frites Stäbchen mit einer gerösteten Kartoffelschicht versehen werden.

Das bisherige Verfahren hat jedoch mehrere Nachteile. Insbesondere besteht ein Nachteil darin, dass relativ viel überschüssige Coating-Flüssigkeit (vom Abtropf-Förderband) aufgesammelt werden muss, welche dann wieder in den Coating-Lösungskreislauf zugegeben wird. Ein weiterer Nachteil besteht auch darin, dass das Abtropf-Förderband relativ lang sein muss, damit bei den hohen Fördergeschwindigkeiten eine genügende Abtropfzeit gegeben ist. Ein weiterer Nachteil ist auch der, dass die Beschichtung mit Coating der einzelnen stabförmigen Kartoffelprodukte relativ ungleichmäßig ist und auch einzelne Kartoffelprodukte an einigen Stellen keine Beschichtung aufweisen, wenn einzelne stabförmige Kartoffelprodukte im Transportverband direkt (unter Berührung) nebeneinander liegen, so dass die Coating-Lösung nicht zwischen die Kartoffelprodukte gelangt.

Als Ergebnis lässt sich feststellen, dass die gewünschte Qualität hinsichtlich der Crossheit (Knusprigkeit) der Kartoffelprodukte nicht erreicht wird.

### Erfindung:

Es ist Aufgabe der vorliegenden Erfindung, die vorgenannten Nachteile zu vermeiden und die Qualität der Kartoffelprodukte zu verbessern.

Die Aufgabe wird durch ein Verfahren mit den Merkmalen nach Anspruch 1, durch eine Vorrichtung mit den Merkmalen nach Anspruch 7 gelöst. Vorteilhafte Weiterbildungen sind in den Unteransprüchen beschrieben.

Der wesentliche Unterschied zwischen dem Stand der Technik und der Erfindung besteht darin, dass bei dem erfindungsgemäßen Verfahren die Kartoffelprodukte nicht in einem feststehenden Verband transportiert werden, sondern während des Transports durch eine Trommel mehrfach gewendet und/oder umgewälzt und/oder in einer Richtung quer zur Transportrichtung bewegt werden. Hierdurch ist es möglich, dass an sämtliche Seiten und Stellen des Kartoffelprodukts die Coating-Lösung aufgetragen wird und der Bedeckungsgrad sehr hoch ist.

Das erfindungsgemäße Kartoffelprodukt zeichnet sich durch einen mehr als 90%-igen Bedeckungsgrad die Coating-Substanz (vorzugsweise 100% Bedeckungsgrad) und darüberhinaus ist die Coating-Substanz (Flüssigkeit) relativ gleichmäßig über die Außenfläche des Kartoffelproduktes aufgetragen.

Das erfindungsgemäße Verfahren erlaubt aber auch erstmals ein sogenanntes Trocken-Coating, bei der die Coating-Substanz nicht in einer Flüssigkeit (H20) gelöst ist, sondern in Trockenform, also als feine Partikel bzw. Pulver den Kartoffelprodukten zugegeben werden. Dies geschieht vorzugsweise auch dadurch, dass die Kartoffelprodukte auf ein bestimmtes elektrisches statisches Potential aufgeladen werden, während die Coating-Partikel auf ein anderes (entgegengesetztes) Potential aufgeladen sind, so dass diese von den Kartoffelprodukten angezogen werden und da diese Kartoffelprodukte einer ständigen Wendung bzw. Umwälzung während des Transports unterworfen werden, ist auch mittels des Trocken-Coatings ein sehr hoher Bedeckungsgrad der Kartoffelprodukte mit dem Coating möglich.

Bei dem erfindungsgemäßen Coating entsteht ein erheblich geringerer Überschuss an Coating-Substanz als bei den bekannten Verfahren. Bei dem erfindungsgemäßen Verfahren wird nämlich stets darauf geachtet, dass zwar noch ein geringer Überschuss von Coating-Substanz nach Verlassen der Transporteinrichtung abtropft, sobald aber die Menge des Überschusses zunimmt, wird die Zugabe der Coating-Menge verringert, so dass die zugegebene Menge stets mittels der gemessenen Menge des Überschusses auf ein Optimum eingestellt werden kann. Weitere Vorteile des erfindungsgemäßen Verfahrens sind wie folgt:
- Kurze Distanz der gecoateten Produkte zur Fritiereinrichtung; hierdurch wird gewährleistet, dass die Coating-Menge (als Pulver oder in einer Flüssigkeit (Wasser)) gelöst am Kartoffelprodukt haften bleibt, bis sie durch die Fritiereinrichtung am Kartoffelprodukt fixiert wird;
- keine Schütteleinrichtung, wie bei einem Abtropf-Förderband nach dem Stand der Technik;
- Reduzierung der Bruchmenge (weniger Pommes Frites-Bruch) der Kartoffelprodukte; derlei Bruch entsteht häufig auf den Abtropf-Förderbändern bei den Vorrichtungen nach dem Stand der Technik;
- leicht einstellbare Transportzeit während der Benetzungsphase der Kartoffelprodukte in der Coating-Einrichtung (Trommel);
- genaue Dosierung der exakten benötigten Menge des Coatings;
- sorgfältigere und schonendere Behandlung der Kartoffelprodukte; dadurch ein sehr geringer Abrasionsgrad der Kartoffelprodukte;
- durch Kühlung und permanenter Transport der Kartoffelprodukte durch Drehung des Mischförderers bleibt die Viskosität der Coating-Lösung konstant (Segregation/Sedimentation der Coating-Flüssigkeit bzw. der Stärke darin ist nicht möglich);
- wegen der bereitgestellten definierten Bedingungen kann eine konstante Aufnahme der Coating-Lösung (Menge) zugesichert oder bereitgestellt werden;
- wegen der exakten Coating-Aufnahme bzw. wegen des hohen Benetzungsgrades bzw. Bedeckungsgrades der Kartoffelprodukte mit Coating-Substanz, stellt sich nur eine sehr geringe Kontaminierung des Fritieröls ein;
- geringerer Fritieröl-Verbrauch;
- geringere Fritieröl-Degradation;
- längere Haltbarkeit des Fritieröls;
- beim Transport durch die Trommel kann der Coating-Bereich gekühlt werden, wodurch das mikrobiologische Wachstum reduziert wird und mithin jedes Risiko des Verderbes der Kartoffelprodukte ausgeschlossen werden kann (falls - aus welchen Gründen auch immer - doch einmal sich ein Transportstopp einstellen sollte);
- bessere Qualität der Kartoffelprodukte; gleichmäßigere Farbe der Kartoffelprodukte nach dem Fritiervorgang;
- bessere Krossheit der Kartoffelprodukte nach dem Fritiervorgang;
- Einstellbarkeit der Qualität und Einstellbarkeit des Benetzungsgrades durch Einstellung der Zugabe von Coating-Substanz und/oder der Transportgeschwindigkeit durch die Trommel;
- durch den exakten Coating-Auftrag ist eine längere Heißhaltung der Kartoffelprodukte nach Entnahme aus der Fritiereinrichtung gewährleistet. Mithin sind die erfindungsgemäßen Kartoffelprodukte standfestiger;
- geringere Variationen der Temperatur der Fritiereinrichtung;
- Zusammenbacken von Kartoffelprodukten in der Fritiereinrichtung wird vermieden;
- es kann eine definierte Textur der fritierten Pommes Frites erreicht werden;
- es kann der Feuchtgehalt (Wassergehalt) der Pommes Frites exakt eingestellt werden (z.B. zwischen 65 - 70%);
- wegen der besseren Haftbarkeit und des vollständigen Bedeckungsgrades der Kartoffelprodukte tropft Öl von der Oberfläche leichter ab und mithin ist die Trocknung der Kartoffelprodukte schneller und/oder vollständiger durchzuführen, was die gesamte Verarbeitungszeit verkürzt;
- 100%-iger Bedeckungsgrad der Kartoffelprodukte mit Coating-Substanz (flüssig und/oder nass);
- in etwa gleichmäßige Schichtdicke der Coating-Substanz (Flüssigkeit oder Partikel) auf den Kartoffelprodukten;
- Vermeiden des enzymbedingten Braunwerdens (eine Kartoffel wird bekanntlich braun, wenn sie zu lange dem Luftsauerstoff ausgesetzt wird);
- Auswaschen des reduzierenden Zuckers;
- weniger als 10% Coating-Überschuss-Menge.

Die zeichnerischen Ausführungsbeispiele sind in Darstellungen wiedergegeben. Hierin zeigen:
Figur 1 zeigt in einer Prinzipskizze eine erfindungsgemäße Coating-Einrichtung
Figur 2 zeigt die Vorderansicht eines Mitnehmers gemäß Schnitt A - A in Figur 1.
Figur 3 zeigt eine Obenaufsicht auf die erfindungsgemäße Coating-Einrichtung.
Figur 4 zeigt eine alternative Ausführung der Trommel nach Figur 1.
Figur 5 zeigt einen Querschnitt entlang Linie B - B in Figur 4.
Figur 6 zeigt einen Längs- und Querschnitt durch ein erfindungsgemäßes Kartoffelprodukt.

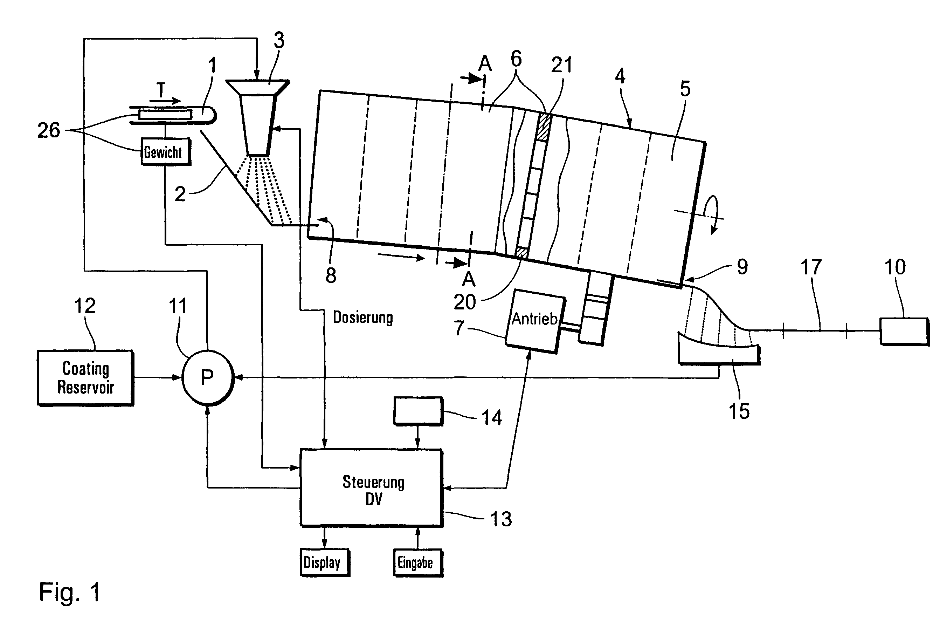

Figur 1 zeigt in einer Prinzipdarstellung eine erfindungsgemäße Vorrichtung zur Beschichtung von Kartoffelprodukten mit einer Coating-Menge (Lösung, Pulver). Coating-Lösungen (Stärke, gelöst in Wasser) sind schon länger bekannt und neben einem hohen Stärkeanteil können sie auch noch weitere Nahrungsmittelsubstanzen, wie beispielsweise Gewürze, Salze usw. enthalten (auch Substanzen von anderen Nahrungsmittelprodukten wie Reis), die der sensorischen Beeinflussung des Produkts dienen.

Figur 1 zeigt eine Fördereinrichtung 1, über die die zu coatenden Kartoffelprodukte - Pommes Frites - zugeführt werden. Diese fallen auf eine Rutsche 2 über der eine Einrichtung 3 zum Austrag (vorzugsweise Sprühen bei Flüssigkeitslösung) der Coating-Menge angeordnet ist.

Die Rutsche 2 mündet in eine Trommel 4, die nach Art eines Mischförderers 5 ausgebildet ist. Die Kartoffelprodukte werden durch die Trommel (in Pfeilrichtung) vom Trommeleinlass 8 zum Trommelauslass 9 transportiert. Am Trommelauslass gelangen die gecoateten Kartoffelprodukte auf eine weitere Fördereinrichtung, vorzugsweise Rutsche (Kettenband), wo die überschüssige Coating-Menge abtropfen kann, die dann in eine Aufnahme 25 fällt. Dort wird die überschüssige Coating-Menge gesammelt und mittels einer Pumpe 11 abgepumpt und wiederum der Coating-Austragseinrichtung 3 zugeführt. Die Pumpe erhält Coating-Menge auch an den Reservoir 12.

Die gecoateten Kartoffelprodukte werden nach dem Auslass aus der Trommel 4 wiederum mittels einer entsprechenden Einrichtung 17 in ihre Längsrichtung ausgerichtet (die Mittel hierzu sind bekannt) und dann einer Fritiereinrichtung 10 zugeführt. Auch solche Fritiereinrichtungen zum Fritieren (wenigstens Vorfritieren) sind bereits bekannt und werden an dieser Stelle nicht näher beschrieben.

Im Anschluss an die Fritierung werden die Kartoffelprodukte einer Verpackungsstation (nicht dargestellt) zugeführt oder auf eine Temperatur von etwa 4 - 6° gekühlt und verkaufsfertig weiterverarbeitet.

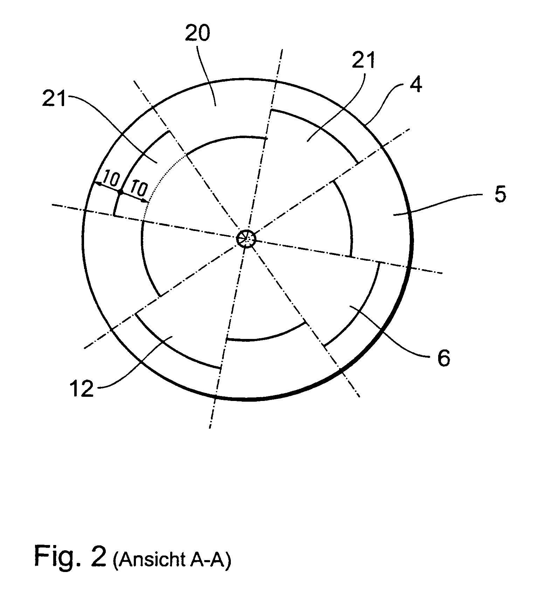

Die in Figur 1 dargestellte erfindungsgemäße Einrichtung zeigt eine geneigte Trommel, an der innenseitig konzentrische Ringe angebracht sind. Die Aufsicht auf einen Ring (Scheibe) ist in Figur 2 gezeigt. Die Scheiben weisen innenseitig Auslassungen 21 und/oder Vorsprünge 20 auf, die eine Mitnehmerfunktion haben. Die Trommel weist mehr als eine Scheibe auf.

Dreht sich die Trommel, ergreifen die Mitnehmer-Ringe (Scheiben) die Kartoffelprodukte und transportieren diese in die nächste Abteilung hinter dem jeweiligen Ring, da durch die Neigung die Kartoffelprodukte dorthin fallen, wenn sie vom Mitnehmer (nach Mitnahme) abrutschen.

Mithin ist die dargestellte Einrichtung ein (Schnecken-)Mischförderer (mit quasi Schaufeln bzw. Paddeln). Durch die Mitnehmer werden die Kartoffelprodukte sowohl gefördert als auch gleichzeitig gerührt (gemischt, gewendet, gewälzt). Man kann die erfindungsgemäße Einrichtung deshalb auch als Rühr- oder Mischschnecke bezeichnen.

Wie in Figur 2 zu sehen, ist der mittlere Innen-Durchmesser der Ringe deutlich geringer als der Durchmesser der Trommel. Figur 2 zeigt einen Schnitt entlang der Linie A - A in Figur 1. Der Ring 6 (u.U. mehrere mm dick (bis 5 cm)) weist vorzugsweise innenseitig Auslassungen 21 oder Vorsprünge 20 auf. Die Tiefe der Auslassungen bzw. die Höhe der Vorsprünge ist einstellbar (z.B. durch Austausch von Ringen). Die ringförmigen Mitnehmer 6 sorgen dafür, dass beim Transport der Kartoffelprodukte durch die Trommel (Schneckenförderer) einzelne Kartoffelproduke erfasst werden und somit gewendet oder umgewälzt, zumindestens aber in eine Richtung in etwa quer zur Transportrichtung bewegt werden, so dass der gesamte Verbund der Kartoffelprodukte nicht starr - wie bisher - transportiert wird, sondern im Verbund selbst eine Bewegung der Kartoffelprodukte zueinander eingestellt wird und dass durch die Bewegung einzelner Kartoffelprodukte gegen andere diese nicht zusammen haften bleiben, sondern während des Transports durch die Trommel auch noch solche Stellen von Kartoffelprodukten mit Coating-Menge benetzt werden können, an die bei Coating-Zugabe der Kartoffelprodukte im Einlassbereich der Trommel noch keine Coating-Menge herangekommen ist.

Selbstverständlich ist die Transportgeschwindigkeit (durch Drehzahleinstellung und/oder durch Neigung der Trommel) wie auch die Zugabemenge der Coating-Menge mittels einer zentralen Steuerungseinrichtung 13 auf einen gewünschten optimalen Wert einstellbar, so dass beim Verlassen der Kartoffelprodukte aus der Trommel diese mit wenigstens 90% der Oberfläche, vorzugsweise 100% der Oberfläche mit Coating-Menge benetzt/bedeckt sind.

Bei der Einstellung der Transportgeschwindigkeit mittels der Drehzahl der Trommel wird darauf geachtet, dass stets noch überschüssige Coating-Menge, z.B. bis 5 % Überschuss abfällt, was ein Zeichen dafür ist, dass den Kartoffelprodukten insgesamt ausreichend Coating-Menge zur Verfügung steht. Durch Messen der Menge der überschüssigen Coating-Lösung in einer Einrichtung 14 kann der gesamte Coating-Prozess (Geschwindigkeit, Bedeckungsgrad etc.) auf ein gewünschtes Ergebnis eingestellt werden, so dass so viel Coating-Menge wie nötig an die Kartoffelprodukte herangeführt wird (hierzu wird auf das Gewicht der zu coatenden Produkte mittels einer Wägeeinrichtung 16 gemessen), gleichzeitig aber die Menge der überschüssigen Coating-Menge auf ein vorbestimmtes Mindestmaß gehalten wird, so dass durch die Zugabeeinrichtung für die Coating-Menge im Wesentlichen nur "frische" Coating-Menge an die Kartoffelprodukte gegeben wird.

Figur 1 zeigt die zentrale Steuerungs- und Datenverarbeitungseinrichtung 13 (Mikroprozessor) zur Steuerung der gesamten Vorrichtung, insbesondere zur Steuerung der Pumpen-Menge der Pumpe 1 1, zur Steuerung der Dosierung der Austragseinrichtung 3, zur Steuerung des Antriebs 7, damit die Trommel eine gewünschte Drehzahl aufweist. Ferner kann die zentrale Steuerungs- und Datenverarbeitungseinrichtung 13 mittels einer Wägeeinrichtung 16 das Gewicht der zu beschichtenden Kartoffelprodukte messen, außerdem die Temperatur innerhalb der Trommel messen und auf einen gewünschten Wert einstellen, sowie messen, ob überschüssige Coating-Menge in die Aufnahme 15 fällt und gegebenenfalls auch über eine Messeinrichtung 14 die Menge des überschüssigen Coating-Menge genau ermitteln.

Ferner ist die zentrale Steuerungs- und Datenverarbeitungseinrichtung 13 mit einem Display sowie einer Eingabeeinheit verbunden, so dass die Anlage sehr schnell auf andere Produktionsfälle - mittels entsprechender Programmierung - eingestellt werden kann und sämtliche Daten auch stets angezeigt werden können. Ferner werden alle gemessenen Daten über einen längeren Zeitraum gespeichert, so dass in einem Störungsfall unter Umständen auf den entsprechenden Fehler geschlossen werden kann.

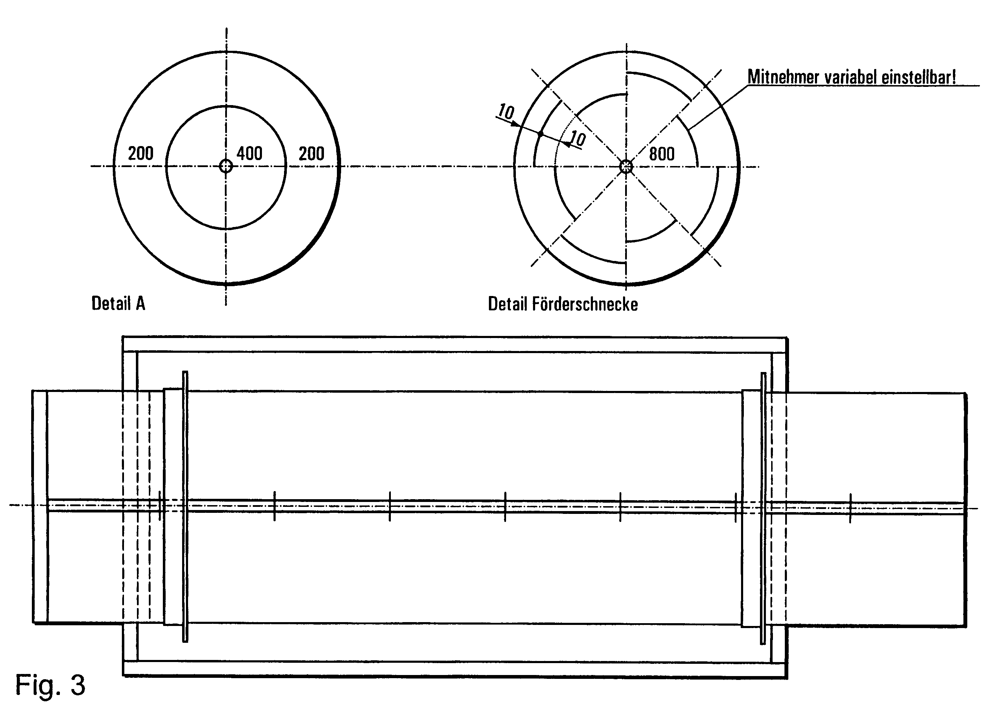

Figur 3 zeigt in der Obenaufsicht eine erfindungsgemäße Einrichtung nach Figur 1.

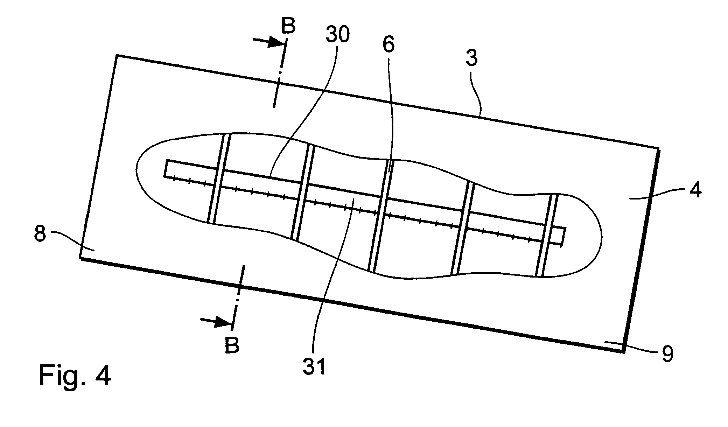

Figur 4 zeigt in einer alternativen Ausführungsform der Trommel der erfindungsgemäßen Einrichtung nach Figur 1, wobei mittels der Einrichtung nach Figur 4 eine Möglichkeit aufgezeigt wird, wie erstmals ein Trocken-Coating der Kartoffelprodukte erreicht werden kann.

Hierzu ist innerhalb der Trommel eine Ausgabeeinrichtung 30 (oder mehrere) für Trocken-Coating-Substanz, vorzugsweise Coating-Pulver vorgesehen. Dies kann beispielsweise konzentrisch in der Trommel angeordnetes Rohr 31 mit (unterseits angeordneten) Öffnungen 33 (mit einer darin geführten Förderschnecke sein). Aus dieser Vorrichtung 31 rieselt oder fällt das Pulver bevorzugt durch die Öffnungen in den unteren Teil der Trommel, durch die die Kartoffelprodukte transportiert werden.

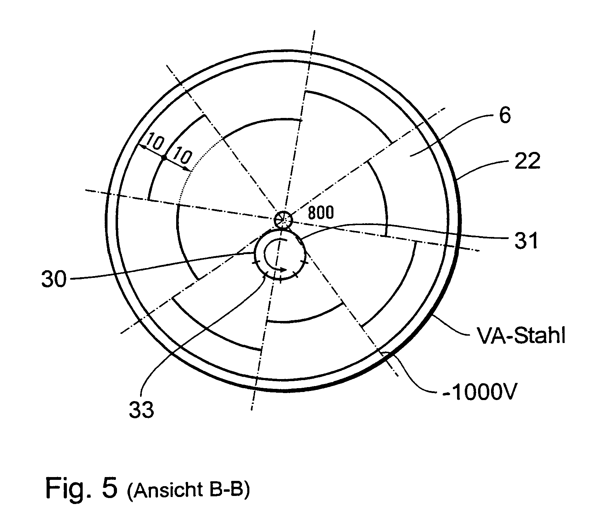

Vorzugsweise besteht die Trommel - siehe Figur 5 - wenigstens innenseitig aus einem elektrisch leitenden Material, an welches eine bestimmte elektrische (elektrostatische) Spannung V1 angelegt wird.

Die Coating-Partikel sind auf einer anderen Spannung V2 aufgeladen (oder nicht aufgeladen), so dass ein erheblicher Spannungsunterschied V1 - V2 zwischen den Coating-Partikeln und den Kartoffelprodukten besteht und die Kartoffelpartikel nach ihrem Austrag von den Kartoffelprodukten angezogen werden. Durch mehrfaches Umwälzen bzw. Wenden der Kartoffelprodukte innerhalb der Trommel werden sämtliche Seiten der Kartoffelprodukte bzw. deren Oberflächen auch der trockenen Coating-Menge ausgesetzt und aufgrund des elektrischen Spannungsunterschiedes (aber auch aufgrund der Schwerkraft der Coating-Partikel) können alle Seiten vollständig mit Trocken-Partikeln bedeckt werden. Auch die Trommelinnenwand wird dabei immer wieder mit Coating-Menge benetzt. Überschüssige Trocken-Partikel wiederum werden nach Verlassen der Trommel gesammelt und das Maßder überschüssigen Menge an Trocken-Partikeln ist im Betrieb ein Zeichen dafür, dass ausreichend Trocken-Coating-Menge an die Kartoffelprodukte herangeführt wird bzw. die Kartoffelprodukte vollständig mit Trocken-Partikeln umgeben bzw. benetzt sind.

Es wäre auch möglich, eine Mischform der Ausführungsform nach Figur 1 und Figur 4 einzusetzen, wobei dann die Menge der Coating-Menge vor dem Einlass und der Coating-Partikel in der Trommel aufeinander abgestimmt werden muss, so dass ein guter Bedeckungsgrad der Kartoffelprodukte erreicht wird.

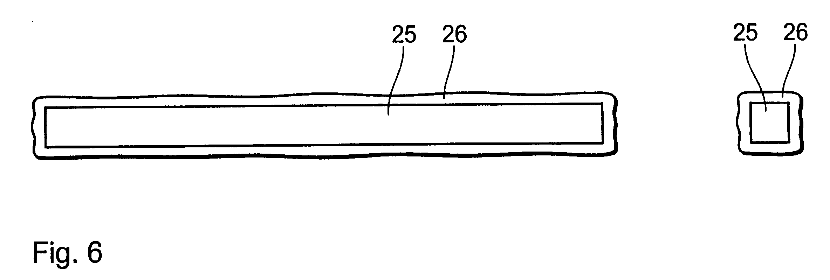

Figur 6 zeigt den (Längs- und Quer-)Schnitt durch ein erfindungsgemäßes stabförmiges Kartoffelprodukt. Dieses ist vollständig von einer Coating-Menge (Flüssiglösung) umgeben, das heißt, dass die gesamte Oberfläche des stabförmigen Kartoffelproduktes - Pommes Frites - mit der Coating-Menge bedeckt bzw. benetzt sind.

Bei dem Trocken-Coating sind entsprechend die Oberflächen vollständig mit Coating-Partikeln bedeckt.

Außerdem ist in dem dargestellten Beispiel die Dicke der Coating-Lösung bzw. der Coating-Lösungsschicht in etwa gleich, das heißt, dass nur relativ geringe Dickenunterschiede gegeben sind. Durch die vollständige und gleichmäßige Beschichtung des Kartoffelproduktes mit Coating-Substanz ist das einzelne Kartoffelprodukt gegenüber der äußeren Umgebung quasi abgedichtet und der Feuchtigkeitsgehalt (Wassergehalt) des Kartoffelproduktes lässt sich exakt einstellen, vorzugsweise auf einen Wert von mehr als 60%, vorzugsweise mehr als 70%.

Außerdem ist durch den Luftabschluss (aufgrund Beschichtung) des Kartoffelproduktes dieses gegen Oxidation geschützt, so dass dieses keine braunen/grüne Stellen ansetzt und auch das mikrobiologische Wachstum kann somit auf ein geringstmögliches Maß reduziert werden.

Da das Coating in der Trommel bei einer Temperatur von beispielsweise 4 - 7°, vorzugsweise 6° C durchgeführt werden kann, ist in der Trommel nicht ein Klima, welches ein mikrobiologisches Wachstum unterschützt.

Der Abtropf-Bereich bei der erfindungsgemäßen Vorrichtung ist deutlich kürzer (weniger als 1,5 m) als bei den bisherigen Abtropf-Förderbändern, zumal die "Abtropf"-Förderlänge durch die Transportgeschwindigkeit in der Trommel, wie aber auch durch die Menge des Zusatzes an Coating-Menge exakt einstellbar ist.

Derdurchschnittfiche Bedeckungsgrad der Kartoffelprodukte beträgt mehrals 70%, vorzugsweise 100% und ist weit höher als bei Kartoffelprodukten, die mit Einrichtungen aus dem Stand der Technik hergestellt werden.

Mit der erfindungsgemäßen Vorrichtung, mit dem erfindungsgemäßen Verfahren können die vorbeschriebenen Vorteile erzielt werden, insbesondere kann ein Kartoffelprodukt bereitgestellt werden, welches insgesamt in der Qualität deutlich höher ist als bei bisherigen gecoateten Kartoffelprodukten und welches nach dem Fritieren auch deutlich krosser ist als bisherige Kartoffelprodukte.

Dieser Qualitätszugewinn wird durch eine sehr einfache Vorrichtung erreicht, die insgesamt deutlich weniger Platz benötigt wie bisherigie Vorrichtungen und auch im Betrieb günstiger ist und bei welcher deutlich weniger überschüssige Coating-Menge anfällt als bei bisher bekannten Einrichtungen.

Alle sensorischen Tests mit der erfindungsgemäßen Einrichtung der hergestellten Kartoffelprodukte zeigen, dass die Qualität und der Bedeckungsgrad, wie er mit der erfindungsgemäßen Einrichtung erzielt werden kann, nicht von den bisherigen Einrichtungen erzielt wird. Auch werden die Vorteile, die mit der erfindungsgemäßen Einrichtung erzielt werden, nicht von den bisherigen Einrichtungen erreicht.

Es versteht sich von selbst, dass einfache Modifikationen an der erfindungsgemäßen Vorrichtung möglich sind, ohne hierbei erfinderisch tätig werden zu können. Hierbei sei insbesondere auf die Form und Ausführung sowie die Zahl der Mitnehmer an dem Schneckenförderer hingewiesen.

Die Erfindung ist auch nicht auf Kartoffelprodukte beschränkt. Es wäre auch möglich andere Nahrungsmittelprodukte, insbesondere andere Gemüseprodukte mit der erfindungsgemäßen Einrichtung bzw. mit dem erfindungsgemäßen Verfahren mit einer anderen gewünschten Coating-Menge zu versehen.

## Patentansprüche

1. Verfahren zur Herstellung eines mit Coating-Menge beschichteten und/oder benetzten Kartoffelproduktes, nämlich eines stabförmigen Kartoffelproduktes (Pommes Frites), wobei die stabförmigen Kartoffelprodukte durch eine drehbare Trommel (4) transportiert werden und während des Transportes wenigstens einmal gewendet werden und/oder quer zur Transportrichtung (→) bewegt werden und/oder umgewälzt werden und die Coating-Menge in Form eines (Trocken-)Pulvers innerhalb der Trommel (4) den Kartoffelprodukten zugesetzt wird, wobei die Trommel (4) als Fördereinrichtung (1) nach Art eines Mischförderers (5) ausgebildet ist und die Fördereinrichtung mehrere ringförmige Mitnehmer (6, 20) aufweist, die einzeln und/oder mehrere Kartoffelprodukte erfassen und diese umwälzen und/oder wenden und/oder in eine Richtung etwa quer zur Transportrichtung bewegen und die Fördergeschwindigkeit je nach Konsistenz der Coating-Menge und/oder gewünschten Beschichtungsgrad der Kartoffelprodukte mittels der gewünschten Drehzahl einstellbar ist, wobei das Kartoffelprodukt beim Ausgang zu mehr als 90 %, vorzugsweise 100 % mit der Coating-Menge beschichtet ist.

2. Verfahren nach Anspruch 1,
**dadurch gekennzeichnet, dass** beim Verlassen der Trommel die Kartoffelprodukte vollständig beschichtet sind.

3. Verfahren nach einem der vorhergehenden Ansprüche,
**dadurch gekennzeichnet, dass** beim Verlassen der Kartoffelprodukte aus der Trommel überschüssige Coating-Menge gesammelt und die gesammelte überschüssige Menge wieder Kartoffelprodukten beim Eintritt in die Trommel und/oder in der Trommel zugesetzt wird.

4. Verfahren nach einem der vorhergehenden Ansprüche,
**dadurch gekennzeichnet, dass** die Coating-Substanz in einer Flüssigkeit, vorzugsweise Wasser, gelöst ist und die noch unbeschichteten Kartoffelprodukte über eine Rutsche in die Trommel eintreten und die Coating-Menge auf der Rutsche den Kartoffelprodukten zugegeben wird (Nass-Coating).

5. Verfahren nach einem der vorhergehenden Ansprüche,
**dadurch gekennzeichnet, dass** die Kartoffelprodukte nach Verlassen der Trommel einer Frittiereinrichtung zugeführt werden.

6. Verfahren nach einem der vorhergehenden Ansprüche,
**dadurch gekennzeichnet, dass** das Coating bei einer Temperatur von etwa 6° C erfolgt.

7. Vorrichtung zum Coating eines Kartoffelproduktes,
**dadurch gekennzeichnet, dass** eine Transportvorrichtung (1) vorgesehen ist, vorzugsweise nach Art eines Mischförderers (5), die einen Einlass (8) zur Eingabe der zu beschichtenden Kartoffelprodukte sowie einen Auslass (9) zur Ausgabe der beschichteten Kartoffelprodukte aufweist, wobei Mittel (6, 20) vorgesehen sind, einzelne Kartoffelprodukte innerhalb der Transportvorrichtung während des Transports vom Einlass zum Auslass zu wenden und/oder umzuwälzen und/oder in einer Richtung etwa quer zur Transportrichtung (→) zu bewegen und dass die Transportvorrichtung eine Fördereinrichtung mit mehrerer ringförmigen Mitnehmern (6) aufweist.

8. Vorrichtung nach Anspruch 7,
**dadurch gekennzeichnet, dass** Mittel (3) zur Zugabe der Beschichtungs-(Coating)Substanz vorgesehen sind, und dass diese Mittel zur Zugabe der Beschichtungssubstanz außerhalb der Trommel im Einlassbereich (8) und/oder innerhalb der Trommel (4) angeordnet sind.

9. Vorrichtung nach einem der vorhergehenden Ansprüche,
**dadurch gekennzeichnet, dass** die Trommel (4) zum Auslass (9) hin geneigt angeordnet ist, wobei die Neigung im Bereich von 1 - 20 %, vorzugsweise 5 % liegt.

10. Vorrichtung nach einem der vorhergehenden Ansprüche,
**dadurch gekennzeichnet, dass** im Bereich des Auslasses (9) der Trommel und/oder im Anschluss hieran Mittel (15) zur Übernahme der überschüssigen Coating-Menge vorgesehen sind, die im Bereich des Auslasses und/oder im Anschluss hieran von den Kartoffelprodukten abfällt.

11. Vorrichtung nach einem der vorhergehenden Ansprüche,
**dadurch gekennzeichnet, dass** Mittel (17) vorgesehen sind, die die aus der Trommel ausgegebenen Kartoffelprodukte zu einer Frittiereinrichtung (10) weitertransportieren.

12. Vorrichtung nach einem der vorhergehenden Ansprüche,
**dadurch gekennzeichnet, dass** die Kartoffelprodukte (25) auf einem Förderband (2) zur Trommel (4) und/oder deren Einlass (8) transportiert werden und mittels einer entsprechenden Fördereinrichtung (17) von der Trommel (4) bzw. deren Auslass (9) wegtransportiert werden und dass die Breite der Fördereinrichtung (1) größer, vorzugsweise deutlich größer ist als der Durchmesser der Trommel und/oder der Transportbreite innerhalb der Transporteinrichtung.

13. Vorrichtung nach einem der vorhergehenden Ansprüche,
**dadurch gekennzeichnet, dass** die Kartoffelprodukte (25) nach Verlassen der Trommel (4) in einer Vorrichtung in ihre Längsrichtung ausgerichtet werden.

14. Vorrichtung nach einem der vorhergehenden Ansprüche,
**dadurch gekennzeichnet, dass** das Gewicht der zu beschichtenden Kartoffelprodukte (25) vor dem Eintritt in die Trommel mittels einer Wäge-Messeinrichtung ermittelt wird.

15. Vorrichtung nach einem der vorhergehenden Ansprüche,
**dadurch gekennzeichnet, dass** eine zentrale Steuerungseinrichtung (13) vorgesehen ist, mittels der die Dosiermenge der Austragseinrichtung (3) und/oder die Drehzahl der Trommel (4) und/oder die Geschwindigkeit des Antriebs (7) und/oder die Fördermenge der Pumpe (11) und/oder die Temperatur innerhalb der Trommel (4) einstellbar ist und/oder die zentrale Steuerungseinrichtung das Gewicht der zu beschichtenden Kartoffelprodukte mittels einer Wägeeinrichtung (16) misst und die entsprechenden Daten verarbeitet und/oder dass die Steuerungseinrichtung ermittelt, ob eine Überschuss-Coating-Menge am Auslass austritt und/oder die Menge mittels einer Messeinrichtung (14) erfasst.

16. Vorrichtung zur Durchführung eines Verfahrens nach einem der vorhergehenden Ansprüche,
**dadurch gekennzeichnet, dass** die Fördereinrichtung (1) mehrere ringförmige Mitnehmer (6, 20) aufweist, mittels denen einzelne und/oder mehrere Kartoffelprodukte (25) erfassbar sind und diese umwälzbar und/oder wendbar sind und/oder in eine Richtung in etwa quer zur Transportrichtung (→) bewegbar sind und dass die Vorrichtung (Förderschnecke) mehrere Mitnehmer aufweist, die mehrere Auslassungen/Vorsprünge aufweisen.

17. Vorrichtung nach einem der vorhergehenden Ansprüche,
**dadurch gekennzeichnet, dass** an der Trommel (4) ein Antrieb (7) ausgebildet ist, der die Trommel (4) mit einer vorbestimmten, einstellbaren Drehzahl dreht.

18. Vorrichtung nach einem der vorhergehenden Ansprüche,
**dadurch gekennzeichnet, dass** die Fördergeschwindigkeit je nach Konsistenz der Coarting-Menge und/oder gewünschtem Beschichtungsgrad der Kartoffelprodukte mittels der gewünschten Drehzahl einstellbar ist.

19. Vorrichtung nach einem der vorhergehenden Ansprüche,
**dadurch gekennzeichnet, dass** die Trommel (4) und/oder die Mitnehmer (6, 20) aus Kunststoff oder Metall gefertigt sind.

20. Vorrichtung nach einem der vorhergehenden Ansprüche,
**dadurch gekennzeichnet, dass** Mittel vorgesehen sind, mit der die Kartoffelprodukte auf eine bestimmte elektrische Spannung bzw. ein bestimmtes elektrisches Potential (elektrostatisch) aufgeladen werden.

21. Vorrichtung nach Anspruch 20,
**dadurch gekennzeichnet, dass** die Coating-Menge, die sich in der Fördereinrichtung mit den Kartoffelprodukten befindet, Stärkepartikel aufweist, welche ihrerseits eine andere (elektrostatische) Spannung aufweisen als die Kartoffelprodukte.

22. Kartoffelprodukt, hergestellt nach einem Verfahren zur Herstellung eines mit Coating-Menge beschichteten und/oder benetzten Kartoffelproduktes, insbesondere von stabförmigen Kartoffelprodukten (Pommes frites) nach Anspruch 1, wobei die stabförmigen Kartoffelprodukte durch eine Trommel (4) transportiert werden und während des Transportes wenigstens einmal gewendet werden und/oder quer zur Transportrichtung (→) bewegt werden und/oder umgewälzt werden und die Coating-Menge trocken in Form eines pulverförmigen Coating-Partikels beim Eintritt der Kartoffelprodukte in die Trommel (4) und/oder in der Trommel (4) zugegeben wird, wobei das gesamte Kartoffelprodukt (25) einseitig gecoated ist und zu mehr als 90 %, vorzugsweise 100 % mit Coating-Partikeln (Pulver) bedeckt ist und die Schichtdicke des Coatings im Wesentlichen gleichbleibend ist.

23. Kartoffelprodukt, hergestellt mit einem Verfahren nach einem der vorhergehenden Ansprüche,
**dadurch gekennzeichnet, dass** das gesamte Kartoffelprodukt von einer Coating-Menge vollständig umgeben ist.

24. Kartoffelprodukt nach einem der vorhergehenden Ansprüche,
**dadurch gekennzeichnet, dass** die Coating-Menge Stärke und verschiedene Gewürze enthält.

25. Kartoffelprodukt nach einem der vorhergehenden Ansprüche,
**dadurch gekennzeichnet, dass** das Kartoffelprodukt ein Wassergehalt von mehr als 60 %, vorzugsweise 70 % aufweist.

## Claims

1. Method for producing a potato product coated and/or wetted with a coating mass, namely a baton-shaped potato product (chip), whereby the baton-shaped potato products are transported through a rotatable drum (4) and during the transport are turned at least once and/or are moved perpendicular to the transport direction (→) and/or are circulated, and the coating mass is added to the potato products in the form of a (dry) powder inside the drum (4), whereby the drum (4) is in the form of a conveyor device (1), a kind of mixing conveyor (5), and the conveyor device has several annular drivers (6, 20) which pick up individual and/or several potato products and circulate the latter and/or turn them and/or move them in a direction perpendicular to the transport direction, and the conveying speed can be adjusted according to the consistency of the coating mass and/or the desired amount of coating on the potato products by means of the desired speed, whereby the potato product is coated at the output with the coating mass up to more than 90%, preferably 100%.

2. Method according to claim 1, **characterised in that** after leaving the drum the potato products are completely coated.

3. Method according to one of the preceding claims, **characterised in that** when the potato products leave the drum any excess coating mass is collected, and the collected excess mass is added back to the potato products entering the drum and/or into the drum.

4. Method according to one of the preceding claims, **characterised in that** the coating substance is dissolved in a liquid, preferably water, and the still uncoated potato products enter the drum via a slide, and the coating mass is added to the potato products on the slide (wet coating).

5. Method according to one of the preceding claims, **characterised in that** after leaving the drum the potato products are fed into a deep-fat fryer.

6. Method according to one of the preceding claims, **characterised in that** the coating takes place at a temperature of about 6°C.

7. Device for coating a potato product, **characterised in that** a transport device (1) is provided, preferably a kind of mixing conveyor (5), which has an inlet (8) for admitting the potato products to be coated and an outlet (9) for the issue of the coated potato products, whereby means (6, 20) are provided for turning and/or circulating the individual potato products inside the transport device during the transport from the inlet to the outlet and/or for moving them in a direction perpendicular to the transport device (→), and **in that** the transport device has a conveying device with several annular drivers (6).

8. Device according to claim 7, **characterised in that** means (3) are provided for adding the coating substance, and **in that** said means for adding the coating substance are arranged outside the drum in the inlet region (8) and/or inside the drum (4).

9. Device according to one of the preceding claims, **characterised in that** the drum (4) is arranged inclined relative to the outlet (9), whereby the inclination is in the region of 1-20%, preferably 5%.

10. Device according to one of the preceding claims, **characterised in that** in the region of the outlet (9) of the drum and/or in attachment thereto means (15) are provided for taking over the excess coating mass, which falls off the potato products in the region of the outlet and/or afterwards.

11. Device according to one of the preceding claims, **characterised in that** means (17) are provided which transport the potato products coming out of the drum to a deep-fat fryer (10).

12. Device according to one of the preceding claims, **characterised in that** the potato products (25) are transported on a conveyor belt (2) to the drum (4) and/or its inlet (8) and are transported on by means of a suitable conveyor device (17) from the drum (4) or its outlet (9), and **in that** the width of the conveyor device (1) is greater, preferably much greater than the diameter of the drum and/or the transport width inside the transport device.

13. Device according to one of the preceding claims, **characterised in that** the potato products (25) after leaving the drum (4) are aligned in a device in longitudinal direction.

14. Device according to one of the preceding clams, **characterised in that** the weight of the potato products (25) to be coated is determined before the entry into the drum by means of a weighing-measuring device.

15. Device according to one of the preceding claims, **characterised in that** a central control device (13) is provided, by means of which the metered amount of the discharge device (3) and/or the speed of the drum (4) and/or the speed of the drive (7) and/or the conveying amount of the pump (11) and/or the temperature inside the drum (4) can be regulated and/or the central control device measures the weight of the potato products to be coated using a weighting device (16) and processes the corresponding data, and/or **in that** the control device establishes whether there is an excess amount of coating at the outlet and/or establishes the amount using a measuring device (14).

16. Device for performing a method according to one of the preceding claims, **characterised in that** the conveyor device (1) has several annular drivers (6, 20) by means of which individual and/or several potato products (25) can be picked up and the latter can be circulated and/or turned and/or moved in a direction roughly perpendicular to the transport direction (→), and **in that** the device (conveying screw) has several drivers which have several outlets/projections.

17. Device according to one of the preceding claims, **characterised in that** a drive (7) is formed on the drum (4) which turns the drum (4) at a prespecified, adjustable speed.

18. Device according to one of the preceding claims, **characterised in that** the conveying speed can be adjusted according to the consistency of the coating mass and/or the extent to which the potato products are to be coated by setting the desired speed.

19. Device according to one of the preceding claims, **characterised in that** the drum (4) and/or the drivers (6, 20) are made of plastic or metal.

20. Device according to one of the preceding claims, **characterised in that** means are provided by means of which the potato products are charged to a specific electrical voltage or a specific electrical potential (electrostatic).

21. Device according to claim 20, **characterised in that** the coating which is inside the conveying device with the potato products contains starch particles which in turn have a different (electrostatic) voltage than the potato products.

22. Potato product, produced according to a method for producing a potato product coated and/or wetted with a coating mass, in particular a baton-shaped potato product (chip) according to claim 1, in which the baton-shaped potato products are transported through a drum (4) and are turned at least once during the transport and/or are moved perpendicular to the direction of transport (→) and/or circulated, and the coating mass is fed in a dry form as a powdered coating particle on entry of the potato products into the drum (4) and/or is added into the drum (4), whereby the whole potato product (25) is coated on one side and is covered up to 90%, preferably 100%, with coating particles (powder) and the thickness of the layer of coating remains essentially constant.

23. Potato product produced in a method according to one of the preceding claims, **characterised in that** the whole potato product is completely covered by a coating mass.

24. Potato product according to one of the preceding claims, **characterised in that** the coating mass contains starch and various spices.

25. Potato product according to one of the preceding claims, **characterised in that** the potato product has a water content of over 60%, preferably 70%.

## Revendications

1. Procédé pour préparer un produit de pommes de terre, mouillé et/ou revêtu d'une quantité d'enrobage, à savoir un produit de pommes de terre en forme de bâtonnets (pommes frites), les produits de pommes de terre en forme de bâtonnets étant transportés au moyen d'un tambour rotatif (4) et tournés au moins une fois pendant le transport et/ou déplacés transversalement par rapport à la direction de transport (->) et/ou retournés pendant le transport et la quantité d'enrobage étant ajoutée sous forme d'une poudre (sèche) aux produits de pommes de terre dans le tambour(4), le tambour (4) en tant que dispositif convoyeur (1) étant formé selon la technique d'un transporteur de mélange(5) et le dispositif convoyeur présentant plusieurs doigts d'entraînement (6,20) de forme annulaire qui saisissent des produits de pommes de terre, individuels et/ou multiples, et retournent ceux-ci, et/ou les tournent, et/ou les déplacent dans une direction approximativement transversale à la direction de transport et la vitesse de transport peut être réglée en fonction de la consistance de la quantité d'enrobage et/ou du degré de revêtement souhaité des produits de pommes de terre, au moyen de la vitesse de rotation souhaitée, le produit de pommes de terre est revêtu à la sortie à raison de plus de 90%, de préférence 100%, de la quantité d'enrobage.

2. Procédé selon la revendication 1, **caractérisé en ce que** les produits de pommes de terre sont complètement revêtus lorsqu'ils quittent le tambour.

3. Procédé selon l'une quelconque des revendications précédentes, **caractérisé en ce que**, lorsque les produits de pommes de terre quittent le tambour, la quantité d'enrobage en excès est recueillie et la quantité en excès recueillie est de nouveau ajoutée aux produits de pommes de terre lorsqu'ils entrent dans le tambour et/ou dans le tambour.

4. Procédé selon l'une quelconque des revendications précédentes, **caractérisé en ce que** la substance d'enrobage est dissoute dans un liquide, de préférence l'eau, et les produits de pommes de terre encore non revêtus entrent dans le tambour par l'intermédiaire d'une goulotte et la quantité d'enrobage est ajoutée aux produits de pommes de terre sur la goulotte (enrobage à l'état humide).

5. Procédé selon l'une quelconque des revendications précédentes, **caractérisé en ce que** les produits de pommes de terre après avoir quitté le tambour sont introduits dans un dispositif de friture.

6. Procédé selon l'une quelconque des revendications précédentes, **caractérisé en ce que** l'enrobage se réalise à une température d'environ 6°C.

7. Dispositif pour enrober un produit de pommes de terre,
**caractérisé en ce qu'**un dispositif de transport (1) est prévu, de préférence d'après la technique d'un transporteur de mélange(5), qui présente une entrée (8) pour introduire les produits de pommes de terre à revêtir, ainsi qu'une sortie (9) pour évacuer les produits de pommes de terre revêtus, des moyens (6,20) étant prévus pour tourner et/ou retourner et/ou déplacer dans une direction approximativement transversale à la direction de transport (->), des produits de pommes de terre individuels, dans le dispositif de transport pendant le transport de l'entrée vers la sortie et que dispositif de transport présente un dispositif convoyeur avec plusieurs doigts d'entraînement (6) de forme annulaire.

8. Dispositif selon la revendication 7, **caractérisé en ce que** des moyens (3) sont prévus pour ajouter la substance de revêtement (enrobage) et que ces moyens pour ajouter la substance de revêtement sont disposés à l'extérieur du tambour dans la zone d'entrée (8) et/ou à l'intérieur du tambour (4).

9. Dispositif selon l'une quelconque des revendications précédentes, **caractérisé en ce que** le tambour (4) est disposé de façon inclinée par rapport à la sortie (9), l'inclinaison étant dans la plage de 1 à 20%, de préférence 5%.

10. Dispositif selon l'une quelconque des revendications précédentes, **caractérisé en ce que** des moyens (15) sont prévus pour recueillir la quantité d'enrobage en excès dans la zone de sortie (9) du tambour, et/ou raccordée à celle-ci, laquelle quantité se détache des produits de pommes de terre dans la zone de la sortie, et/ou dans la zone raccordée à celle-ci.

11. Dispositif selon l'une quelconque des revendications précédentes, **caractérisé en ce que** des moyens (17) sont prévus qui transportent plus loin les produits de pommes de terre évacués du tambour, vers un dispositif de friture (10).

12. Dispositif selon l'une quelconque des revendications précédentes, **caractérisé en ce que** les produits (25) de pommes de terre sont transportés sur une bande convoyeuse (2) vers le tambour (4), et/ou son entrée (8), et sont emportés au moyen d'un dispositif convoyeur correspondant (17), loin du tambour (4) ou de sa sortie (9), et que la largeur du dispositif convoyeur (1) est plus importante, de préférence nettement plus importante, que le diamètre du tambour, et/ou de la largeur de transport à l'intérieur du dispositif de transport.

13. Dispositif selon l'une quelconque des revendications précédentes, **caractérisé en ce que** les produits (25) de pommes de terre sont orientés selon leur direction longitudinale dans un dispositif, en quittant le tambour (4).

14. Dispositif selon l'une quelconque des revendications précédentes, **caractérisé en ce que** le poids des produits (25) de pommes de terre à revêtir est déterminé au moyen d'un dispositif de mesure de poids, avant l'entrée dans le tambour.

15. Dispositif selon l'une quelconque des revendications précédentes, **caractérisé en ce qu'**un dispositif de commande central (13) est prévu, au moyen duquel la quantité de dosage du dispositif d'évacuation (3) et/ou la vitesse de rotation du tambour (4) et/ou la vitesse de l'entraînement (7) et/ou la quantité transportée de la pompe (11) et/ou la température à l'intérieur du tambour (4) sont réglables et/ou le dispositif de commande central mesure le poids des produits de pommes de terre à revêtir au moyen d'un dispositif de pesée (16) et traite les données correspondantes et/ou que le dispositif de commande détermine si une quantité en excès d'enrobage sort de la sortie et/ou détecte la quantité au moyen d'un dispositif de mesure (14).

16. Dispositif pour réaliser un procédé selon l'une quelconque des revendications précédentes, **caractérisé en ce que** le dispositif convoyeur (1) présente plusieurs doigts d'entraînement (6,20) de forme annulaire, à l'aide desquels des produits (25) de pommes de terre individuels et/ou multiples peuvent être saisis, et ceux-ci peuvent être retournés, et/ou tournés, et/ou déplacés dans une direction approximativement transversale à la direction de transport (->) et que le dispositif (transporteur à vis sans fin) présente plusieurs doigts d'entraînement qui présentent plusieurs orifices/saillies.

17. Dispositif selon l'une quelconque des revendications précédentes, **caractérisé en ce qu'**un entraînement (7) est formé au niveau du tambour (4), qui fait tourner le tambour (4) à une vitesse de rotation prédéterminée réglable.

18. Dispositif selon l'une quelconque des revendications précédentes, **caractérisé en ce que** la vitesse de transport peut être réglée en fonction de la consistance de la quantité d'enrobage, et/ou du degré de revêtement souhaité, des produits de pommes de terre, au moyen de la vitesse de rotation souhaitée.

19. Dispositif selon l'une quelconque des revendications précédentes, **caractérisé en ce que** le tambour (4) et/ou les doigts d'entraînement (6,20) sont fabriqués en matière plastique ou en métal.

20. Dispositif selon l'une quelconque des revendications précédentes, **caractérisé en ce que** des moyens sont prévus avec lesquels les produits de pommes de terre sont chargés à une tension électrique déterminée ou à un potentiel électrique (électrostatique) déterminé.

21. Dispositif selon la revendication 20, **caractérisé en ce que** la quantité d'enrobage qui se trouve avec les produits de pommes de terre dans le dispositif convoyeur, présente des particules d'amidon, lesquelles présentent de leur côté une tension (électrostatique) autre que celle des produits de pommes de terre.

22. Produit de pommes de terre, préparé selon un procédé pour préparer un produit de pommes de terre, mouillé et/ou revêtu d'une quantité d'enrobage, en particulier un produit de pommes de terre en forme de bâtonnets (pomme frites) selon la revendication 1, les produits de pommes de terre en forme de bâtonnets étant transportés au moyen d'un tambour rotatif (4) et tournés au moins une fois pendant le transport, et/ou déplacés transversalement par rapport à la direction de transport (->) et/ou retournés pendant le transport et la quantité d'enrobage étant ajoutée à sec sous forme d'une particule d'enrobage sous forme pulvérulente lorsque les produits de pommes de terre entrent dans le tambour(4) et/ou dans le tambour (4), la totalité du produit (25) de pommes de terre étant enrobée d'un côté et étant couverte à raison de plus de 90%, de préférence 100%, de particules d'enrobage (poudre) et l'épaisseur de couche de l'enrobage étant restée essentiellement constante.

23. Produit de pommes de terre, préparé avec un procédé selon l'une quelconque des revendications précédentes, **caractérisé en ce que** le produit de pommes de terre entier est complètement entouré par une quantité d'enrobage.

24. Produit de pommes de terre, selon l'une quelconque des revendications précédentes, **caractérisé en ce que** la quantité d'enrobage contient de l'amidon et différentes épices.

25. Produit de pommes de terre, selon l'une quelconque des revendications précédentes, **caractérisé en ce que** le produit de pommes de terre présente une teneur en eau de plus de 60%, de préférence 70%.
